# EUROPEAN PATENT SPECIFICATION

(11) **EP 4 375 673 B1**
(45) Date of publication and mention of the grant of the patent: **06.05.2026**
(21) Application number: 22845698.4
(22) Date of filing: 01.06.2022
(51) Int. Cl.: G01N 35/00, G01N 35/04, G01N 35/10

(54) **AUTOMATIC ANALYSIS DEVICE AND METHOD FOR ADJUSTING INCLINATION THEREOF**
AUTOMATISCHE ANALYSEVORRICHTUNG UND VERFAHREN ZUR NEIGUNGSEINSTELLUNG DAFÜR
DISPOSITIF D'ANALYSE AUTOMATIQUE ET PROCÉDÉ D'AJUSTEMENT DE L'INCLINAISON DE CELUI-CI

(30) Priority: 20.07.2021 JP 2021119196
(43) Date of publication of application: 29.05.2024
(73) Proprietor: HITACHI HIGH-TECH CORPORATION, Tokyo 105-6409 (JP)
(72) Inventor: SAKATA, Kenshiro, Tokyo 105-6409 (JP); SUZUKI, Yoichiro, Tokyo 105-6409 (JP); TAKAHASHI, Takuya, Tokyo 105-6409 (JP); KABE, Yoshihiro, Tokyo 105-6409 (JP)
(74) Representative: Strehl & Partner mbB
(86) International application number: PCT/JP2022/022317
(87) International publication number: WO 2023/002761

(56) References cited:
- WO-A1-2021/053858
- CN-A- 111 701 731
- CN-C- 100 491 995
- CN-U- 213 161 338
- JP-A- 2007 248 413
- JP-A- 2007 248 413
- JP-A- 2016 183 913
- JP-A- H03 285 170

## Description

### Technical Field

The present invention relates to an automatic analyzer according to claim 1 and a tilt adjustment method according to claim 5.

### Background Art

The automatic analyzer determines a reagent to be dispensed depending on a component to be measured in a sample such as blood or urine, and dispenses the sample and the reagent using a dispensing mechanism into a reaction container arranged in a reaction tank storing liquid kept at a constant temperature. The sample and the reagent are stirred using a stirrer in the reaction container to form a reaction solution. In colorimetric analysis, for example, by causing light components at a plurality of wavelengths to be transmitted through the reaction solution to measure a change in absorbance thereof, the concentration of the component to be measured is qualitatively and quantitatively analyzed.

A water level sensor that can detect the liquid level is arranged in the reaction tank, and whether to supply or discharge water is determined depending on whether the water level sensor is detected to keep the water level constant. However, when the reaction tank is tilted, there is a difference in water level between a position where the water level sensor is detected and a position where the water level sensor is not detected. Therefore, four adjuster feet arranged in a device lowermost portion are adjusted to execute the leveling of the reaction tank.

In the leveling of the reaction tank, the adjustment of the adjuster feet and tilt measurement using a measuring instrument such as a level are required to be repeated at a plurality of positions. Therefore, time and effort is required for the work.

Therefore, PTL 1 discloses a method in which a liquid level detection means using a dispensing probe is used, a liquid level is detected at at least three predetermined positions of a reaction tank using the dispensing probe, and a height adjustment amount for executing the leveling of the reaction tank is calculated.

### Citation List

### Patent Literature

PTL 1: JP 2007-248413 A
CN 100 491 995 C is another example of a conventional automatic analyzer.

### Summary of Invention

### Technical Problem

In PTL 1, instead of using the measuring instrument such as a level, the tilting of the reaction tank is detected using the dispensing mechanism. Therefore, there is a limit in that an analysis operation cannot be executed in a period where the tilting of the reaction tank is being detected.

An object of the invention is to provide an automatic analyzer in which a tilt sensor is provided on a mechanism base for supporting each of mechanisms that executes analysis and the tilting of the reaction tank can be automatically checked within a short period of time without interference with the analysis operation, and a tilt adjustment method thereof.

### Solution to Problem

An automatic analyzer according to the invention includes the features defined in claim 1.

### Advantageous Effects of Invention

A tilt amount of an automatic analyzer can be continuously monitored without affecting an analysis operation. Objects, configurations, and effects other than those described above will be clarified by describing the following embodiments.

### Brief Description of Drawings

[Fig. 1A] Fig. 1A is an overall configuration example of an automatic analyzer.
[Fig. 1B] Fig. 1B is a drawing showing an example of a support structure of a mechanism base.
[Fig. 1C] Fig. 1C is an example of a tilt sensor arranged on the upper surface of the mechanism base.
[Fig. 2A] Fig. 2A is a drawing showing an appearance of a tilted automatic analyzer.
[Fig. 2B] Fig. 2B is a drawing showing an appearance of a tilted reaction tank.
[Fig. 3A] Fig. 3A is a drawing showing an appearance of a tilted automatic analyzer.
[Fig. 3B] Fig. 3B is a drawing showing an appearance of a tilted reaction tank.
[Fig. 4A] Fig. 4A is a drawing showing an appearance of an automatic analyzer in a horizontal state.
[Fig. 4B] Fig. 4B is a drawing showing an appearance of a reaction tank in a horizontal state.
[Fig. 5] Fig. 5 is a tilt check flow.
[Fig. 6] Fig. 6 is an example of time series data of sensing data.
[Fig. 7] Fig. 7 is an exceeding date prediction flow.
[Fig. 8] Fig. 8 is an example of curve approximation showing temporal dependence of the tilt amount.
[Fig. 9] Fig. 9 is a tilt adjustment flow.
[Fig. 10] Fig. 10 is a drawing for explaining a tilt adjustment method.

### Description of Embodiments

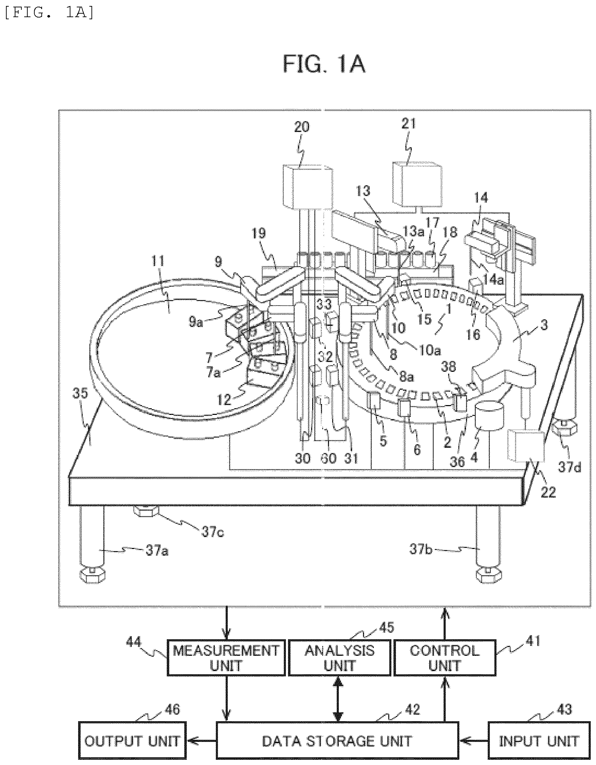

Fig. 1A shows an overall configuration example of an automatic analyzer. The automatic analyzer includes, as a major configuration, a sample transport mechanism 19, a reagent disk 11 on which reagent bottles 12 are mounted, a reaction disk 1 on which reaction containers 2 are mounted, sample dispensing mechanisms 13 and 14, reagent dispensing mechanisms 7, 8, 9, and 10, stirring mechanisms 5 and 6, a spectral photometer 4, a cleaning mechanism 3, cleaning tanks 15, 16, 30, 31, 32, and 33, a reagent pump 20, a sample pump 21, and a cleaning pump 22, and is arranged above or below a mechanism base 35 supported by adjuster feet 37. For convenience of illustration, Fig. 1A shows that the adjuster feet 37 are directly attached to the mechanism base 35, and a support structure of the mechanism base 35 will be described below. In addition, the automatic analyzer includes a control unit 41 that controls each of the units of the automatic analyzer, a data storage unit 42 that accumulates various data, an input unit 43 that inputs necessary data is input to the data storage unit 42 from an external source, a measurement unit 44 that calculates an absorbance from a light quantity obtained by the spectral photometer 4, an analysis unit 45 that determines component amounts from the absorbance, and an output unit 46 that externally displays and outputs analyzed component amount data or the like. The analysis unit 45 executes, for example, determination of a tilt state of the automatic analyzer as described below.

The sample transport mechanism 19 transports a rack (transportation member) 18 where one or more sample containers 17 storing a sample (liquid) to be analyzed can be mounted. On the reagent disk 11, a plurality of reagent bottles 12 storing a reagent (liquid) used for analyzing the sample are arranged in a circumferential direction. On the reaction disk 1, a plurality of reaction containers 2 where the sample and the reagent are mixed to react with each other are arranged in a circumferential direction in a reaction tank 36. The reaction solution in the reaction container 2 is kept at a constant temperature by liquid filled in the reaction tank 36. In addition, the water level of the reaction tank 36 is kept constant by a water level sensor 38.

Each of the sample dispensing mechanisms 13 and 14 dispenses the sample into the reaction container 2 from the sample container 17 transported to a sample dispensing position by the sample transport mechanism 19. Each of the reagent dispensing mechanisms 7, 8, 9, and 10 dispenses the reagent into the reaction container 2 from the reagent bottle 12. The stirring mechanisms 5 and 6 stir the mixed liquid (reaction solution) of the sample and the reagent dispensed into the reaction container 2. The spectral photometer 4 receives transmitted light or scattered light obtained from a light source (not shown) through the reaction solution of the reaction container 2. The cleaning mechanism 3 cleans the used reaction container 2. The sample nozzle cleaning tanks 15 and 16 are arranged in operating ranges of the sample dispensing mechanisms 13 and 14, and clean sample nozzles 13a and 14a with cleaning water, respectively. Likewise, the reagent nozzle cleaning tanks 30, 31, 32, and 33 are arranged in operating ranges of the reagent dispensing mechanisms 7, 8, 9, and 10, and cleans reagent nozzles 7a, 8a, 9a, and 10a with cleaning water, respectively. Further, a tilt sensor 60 that measures a tilt amount of the mechanism base 35 is arranged between the reagent dispensing mechanisms 7 and 8.

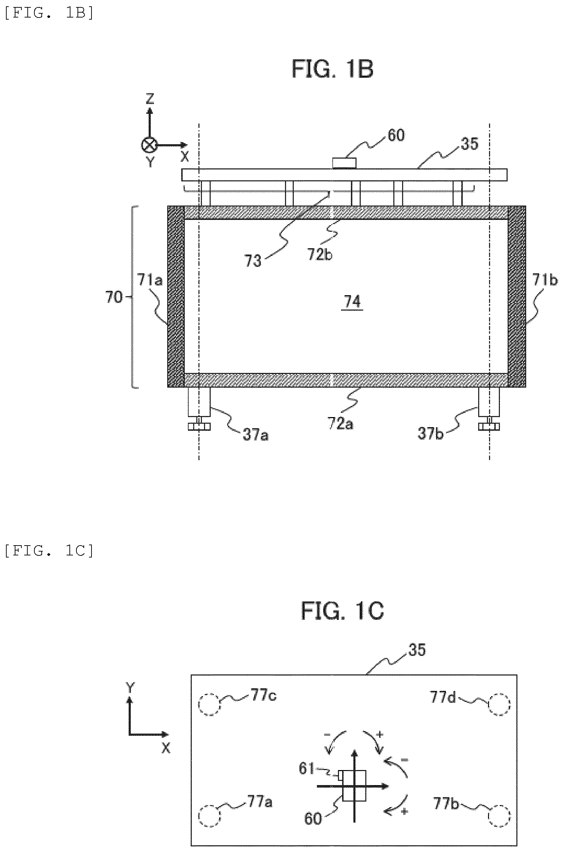

Fig. 1B shows an example of the support structure of the mechanism base 35 in the automatic analyzer. In a frame 70 of a housing of the automatic analyzer, a bottom plate (frame bottom surface) 72a and an upper plate (frame upper surface) 72b are fixed to columns 71a and 71b. In a space 74 divided by the bottom plate 72a and the upper plate 72b parallel to an XY plane and the frame 70 as a structure formed by the columns 71 extending in a Z direction, not only the pumps 20, 21, and 22 described above but also mechanisms such as a water supply mechanism, a water discharge mechanism, a power supply, and a computer functioning as the control unit 41 are accommodated. The four adjuster feet 37 described above are provided in the bottom plate 72a. The mechanism base 35 is supported by support columns 73 provided on the upper plate 72b. The positions of the support columns 73 are affected by the arrangement of the mechanisms arranged on the mechanism base 35 but the support columns 73 are arranged such that the weights of the mechanism base 35 and the mechanisms arranged on the mechanism base 35 are distributed on the upper plate 72b as uniformly as possible.

The analysis of the component amounts of the sample is executed in the following procedure. First, the sample in the sample container 17 loaded on the rack 18 that is transported to the vicinity of the reaction disk 1 by the sample transport mechanism 19 is dispensed into the reaction container 2 on the reaction disk 1 by the sample nozzle 13a (14a) of the sample dispensing mechanism 13 (14). Next, the reagent used for the analysis is dispensed by the reagent nozzle 7a (8a, 9a, 10a) of the reagent dispensing mechanism 7 (8, 9, 10) from the reagent bottle 12 on the reagent disk 11 into the reaction container 2 into which the sample is previously dispensed. Next, the mixed liquid of the sample and the reagent in the reaction container 2 is stirred by the stirring mechanism 5 (6). Next, the measurement unit 44 irradiates the reaction container 2 storing the stirred mixed liquid with light emitted from the light source, measures the light intensity of transmitted light or scattered light using the spectral photometer 4, and accumulates the obtained absorbance data in the data storage unit 42. The analysis unit 45 analyzes the accumulated absorbance data based on calibration curve data and the Beer-Lambert law. Through this analysis, the component amounts in the sample can be analyzed. Data required for the control of each of the units of the automatic analyzer or the analysis is input from the input unit 43 to the data storage unit 42. In addition, various kinds of data or the analysis result is displayed and/or output from the output unit 46.

The configuration of Fig. 1A is a configuration example where the automatic analyzer executes biochemical analysis, and the measurement mechanism varies depending on the content of the analysis that is executed by the automatic analyzer. As a measurement method used in the automatic analyzer, for example, an analysis method (colorimetric analysis) of using a reagent that reacts with an analysis target component in a sample such that the color of the reaction solution changes or an analysis method (immunological analysis) of counting markers using a reagent obtained by adding the marker to a material that is specifically bonded directly or indirectly to an analysis target component in a sample is known. Both of the methods include a step of dispensing a sample stored in the sample container or a reagent stored in the reagent bottle into the reaction container using the dispensing mechanism and mixing the sample and the reagent. The present embodiment is applicable to automatic analyzers that can execute analysis including a dispensing step.

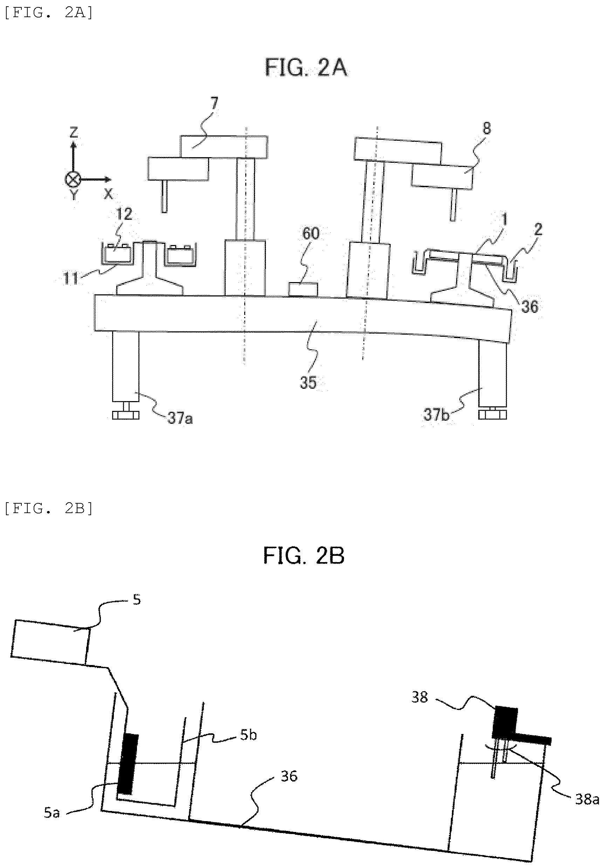

Fig. 2A shows a state of the mechanism base 35 and the tilt sensor 60, the reagent dispensing mechanisms 7 and 8, the reaction disk 1, the reagent disk 11, and the reaction tank 36 mounted on the mechanism base 35 when the level of the entire device is not maintained (the right side is lowered) due to sinking of a floor where the automatic analyzer is provided or adjustment failure of the adjuster feet.

In this case, while the reaction tank 36 shown in Fig. 2B is tilted to the lower right side, the level of the liquid in the reaction tank is maintained (parallel to the XY plane). Fig. 2B shows, as an example where the effect of the tilting of the reaction tank 36 is the strongest, an arrangement example where the water level sensor 38 is arranged on the right side of the reaction tank 36 and the stirring mechanism 5 is arranged on the left side of the reaction tank 36 to face the water level sensor 38. The water level sensor 38 includes detection units 38a having different lengths to detect the water level of the reaction tank 36. In this example, the water level of the reaction tank 36 can be detected in two stages. The stirring mechanism 5 includes a stirring element 5a and a reflection plate 5b, ultrasonically vibrates the stirring element 5a to generate an ultrasonic wave, and stirs the reaction solution in the reaction container 2 (not shown) positioned to be interposed between the stirring element 5a and the reflection plate 5b. By tilting the reaction tank 36 to the lower right side, even when the water level sensor 38 detects that the water level of the reaction tank 36 is appropriate, the stirring element 5a may be partially exposed from the water surface of the reaction tank 36. The stirring element 5a is designed to vibrate in water. Therefore, in this case, when vibrating in air having a low resistance, the stirring element 5a vibrates excessively, which causes a malfunction of the stirring mechanism 5.

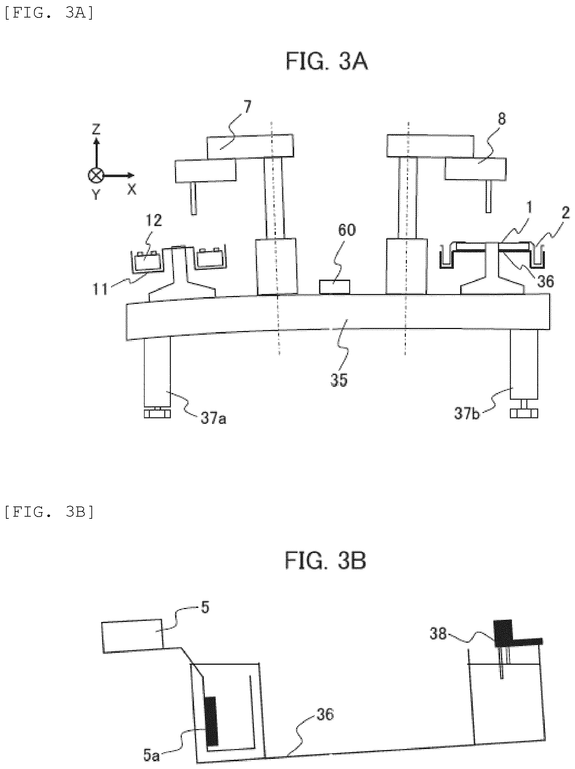

On the other hand, Fig. 3A shows a state of the mechanism base 35 and the tilt sensor 60, the reagent dispensing mechanisms 7 and 8, the reaction disk 1, the reagent disk 11, and the reaction tank 36 mounted on the mechanism base 35 when the entire device is lowered to the left side. In this case, while the reaction tank 36 shown in Fig. 3B is tilted to the lower left side, the level of the liquid in the reaction tank is maintained (parallel to the XY plane). Therefore, even when the water level sensor 38 detects that the water level of the reaction tank 36 is appropriate, liquid overflows from the reaction tank 36 to the surroundings, which causes a malfunction of the device.

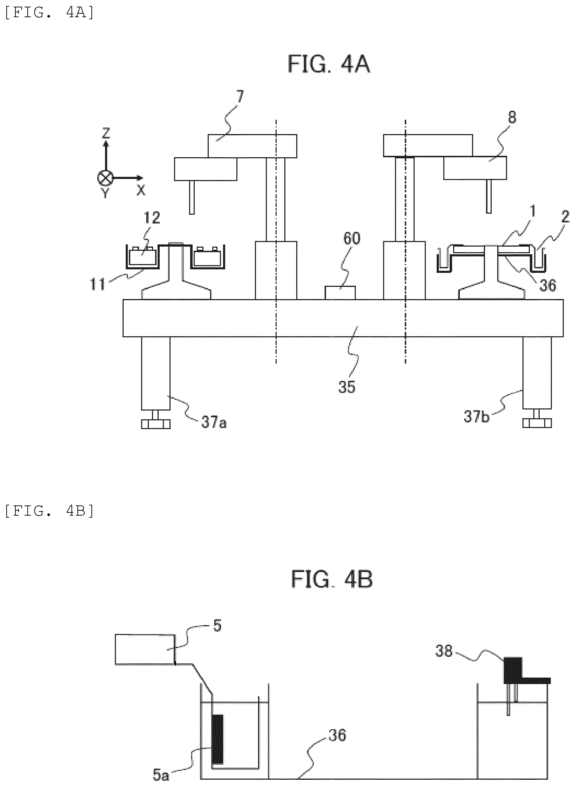

Fig. 4A shows a state of the mechanism base 35 and the tilt sensor 60, the reagent dispensing mechanisms 7 and 8, the reaction disk 1, the reagent disk 11, and the reaction tank 36 mounted on the mechanism base 35 when adjuster feet 37a, 37b, 37c, and 37d are adjusted to appropriate heights and the level of the entire device is maintained. In this case, as shown in Fig. 4B, the levels of the reaction tank 36 and the liquid in the reaction tank 36 are maintained, and the entire stirring element 5a is appropriately positioned in the liquid by the water level sensor 38.

Fig. 1C shows the tilt sensor 60 arranged on the upper surface of the mechanism base 35. It is desirable that the tilt sensor 60 has a small size and a high sensitivity. From this viewpoint, the tilt sensor 60 is preferably a MEMS sensor. When a measured object of the tilt sensor is tilted, there is a difference between the outputs of two acceleration sensors due to the gravitational acceleration. The tilt sensor detects the tilting of the measured object from the difference of the acceleration sensors. The tilt sensor 60 is a tilt sensor capable of detecting tilting of two axes including an X-axis direction and a Y-axis direction, and it is assumed that a clockwise direction in the axis direction is a positive direction and a counterclockwise direction in the axis direction is a negative direction. For example, the tilt sensor 60 detects the tilting in the positive direction around a Y-axis in the example of Fig. 2A, the tilt sensor 60 detects the tilting in the negative direction around the Y-axis in the example of Fig. 3A, and the tilt sensor 60 does not detect the tilting in an X-axis and the Y-axis in the example of Fig. 4A.

In Fig. 1C, positions 77a to 77d overlapping with the adjuster feet 37a to 37d in top view are indicated by circles of a broken line. The automatic analyzer is in contact with the floor surface through the adjuster feet 37. Therefore, the tilting of the mechanism base 35 is determined depending on the heights of the positions 77a to 77d. On the other hand, when there is a variation in height between the positions 77a to 77d of the mechanism base 35, the mechanism base 35 is tilted with a distortion. At the positions 77a to 77d overlapping with the adjuster feet 37a to 37d in top view, the effect of the distortion of the mechanism base 35 is predominant, and even when the tilt sensor 60 is arranged, the tilting of the mechanism base 35 cannot be detected. Therefore, the tilt sensor 60 is arranged at a position not overlapping with the adjuster feet 37a to 37d in top view. Further, the frame upper surface 72b and the frame bottom surface 72a have a rectangular shape, and the adjuster feet 37a to 37d are arranged at at least four corners of the frame bottom surface 72a, respectively. From the viewpoint of the sensitivity with which the tilting is detected, it is desirable that the tilt sensor 60 is arranged on the inner side of the adjuster feet 37a to 37d arranged at four corners of the frame bottom surface 72a in top view.

In addition, the tilt sensor 60 includes an external terminal 61 that is connected to an external device and executes power supply and communication such that the tilting of the device can be detected even in a state where power is not supplied to the automatic analyzer. As a result, the tilt sensor 60 operates as a sensor by the power supply and control from the external device. The adjustment of the adjuster feet 37 is executed in a state where the power of the device is interrupted. However, even in a state where the power of the device is interrupted, the tilting of the device can be checked by the tilt sensor 60.

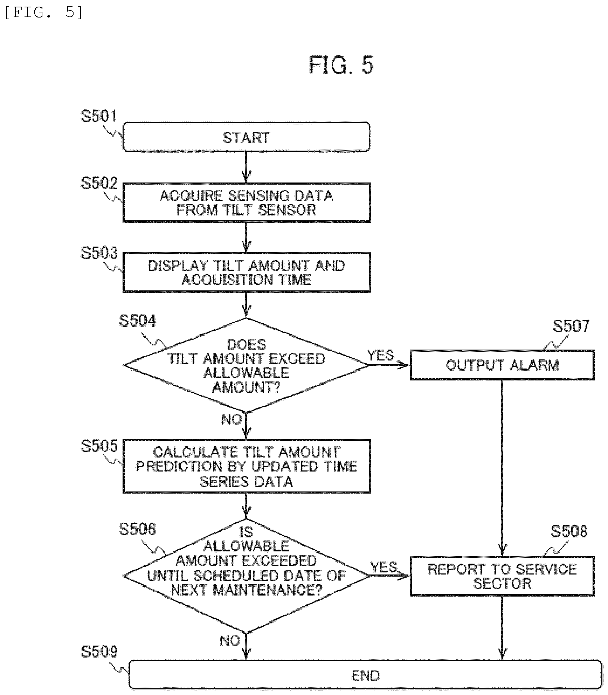

Fig. 5 shows an example of a tilt check flow by the tilt sensor 60. For example, the control unit 41 executes the tilt check as a part of a preparation operation when a user starts the analysis operation, or automatically executes the tilt check in the background during the analysis (S501). Sensing data representing a tilt amount acquired from the tilt sensor and acquisition time of the sensing data are stored in the data storage unit 42 (S502). Next, the output unit 46 displays the tilt amount and the acquisition time such that the user can check the tilt amount and the acquisition time (S503). The analysis unit 45 determines whether the tilt amount exceeds a predetermined allowable amount (S504). The allowable amount is predetermined as a range in which the water level of the reaction tank 36 detected by the water level sensor 38 allows the reaction tank 36 and the stirring mechanism 5 to operate appropriately. When the tilt amount exceeds the allowable amount, an alarm is output, and the occurrence of abnormality in the tilting is notified to the user (S507). Further, the occurrence of abnormality is reported to a service sector to urge maintenance work (S508). On the other hand, when the tilt amount does not exceed the allowable amount, the analysis unit 45 calculates the tilt amount prediction based on updated time series data of the data storage unit 42 (S505), and determines whether the allowable amount is exceeded until a scheduled date of next maintenance (S506). When the analysis unit 45 determines that the allowable amount is exceeded until the scheduled date of next maintenance, the control unit 41 automatically reports the predicted schedule to the service sector to urge maintenance work (S508). When the analysis unit 45 determines that the allowable amount is not exceeded until the scheduled date of next maintenance, the tilt check ends (S509).

In the example of Fig. 5, an example in which the control unit 41 is connected to the service sector through a network is described. Otherwise, instead of Step S508, the output unit 46 may display an alarm urging the user to report the occurrence of abnormality to the service sector.

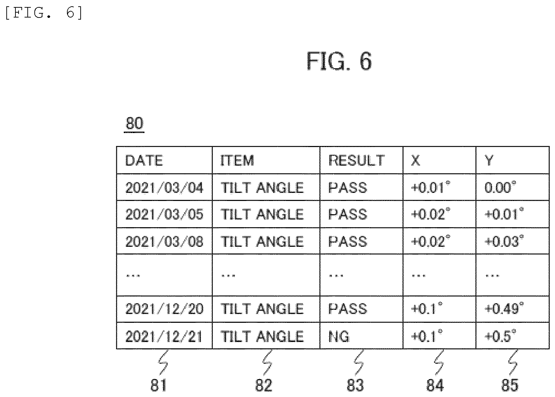

Fig. 6 shows an example of the time series data of the sensing data of the tilt sensor 60 stored in the data storage unit 42. Time series data 80 includes an acquisition time 81, an item 82, a determination result 83, and sensing data 84 and 85. The sensing data 84 and 85 show the tilt amounts of the two axes output from the tilt sensor 60, and the determination result 83 stores a comparison result to the allowable amount in Step S504. The acquisition time 81 shows only the date but may also include the time. Through the tilt check flow, the latest tilt amount of the device is automatically monitored, and whether the tilt amount is in the allowable range is determined. As a result, the device can ensure the execution of the analysis while maintaining appropriate levelness.

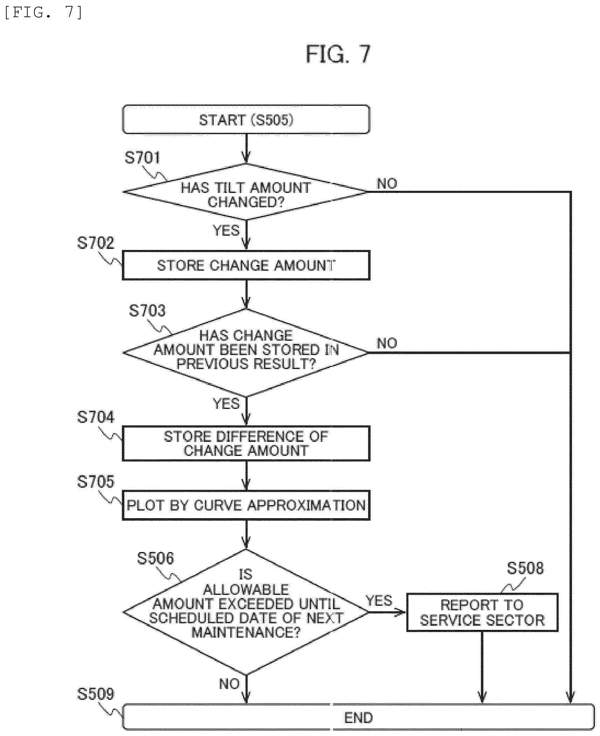

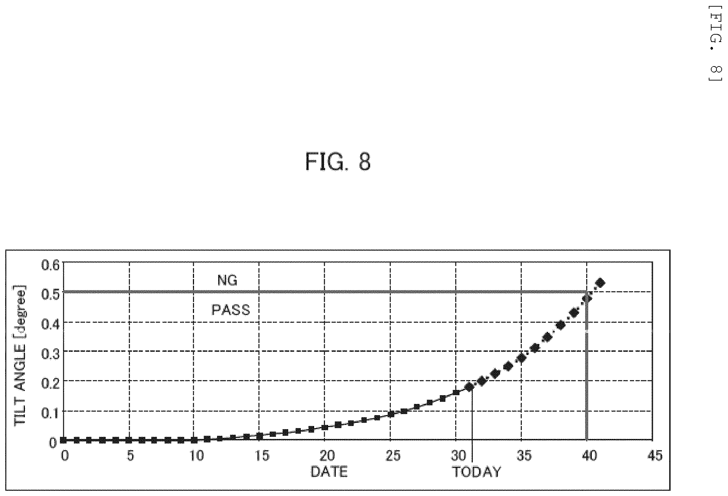

In addition, in this check flow, even when the allowable amount is not exceeded at this time, the tilt amount is analyzed, and a timing at which the allowable amount is exceeded is predicted (S505). Fig. 7 shows an example of an exceeding date prediction flow in which the analysis unit 45 predicts the date on which the tilt amount of the device exceeds the allowable amount. The analysis unit 45 compares current sensor data acquired from the tilt sensor 60 with previous sensor data acquired from the tilt sensor 60, and checks whether the tilt amount of the device changes (S701). When the tilt amount does not change, the exceeding date prediction flow ends as it is (S509). When the tilt amount changes, the analysis unit 45 calculates a change amount of tilting, and stores the change amount in the data storage unit 42 (S702). Next, whether the change amount of tilting is previously stored in the data storage unit 42 is determined (S703). When the change amount of tilting is initially stored, the exceeding date prediction flow ends as it is (S509). When the change amount of tilting is previously stored, the analysis unit 45 calculates a difference between a previous change amount of tilting and a current change amount of tilting, and stores the result in the data storage unit 42 (S704). Based on information stored in the data storage unit 42 such as a period where tilting initially occurs, the change amount of tilting at that time, and a difference in the change amount of tilting after that time, the analysis unit 45 acquires temporal dependence of the tilt amount by executing curve approximation as in Fig. 8 (S705). By extending the approximated curve to the future, a timing at which the allowable amount exceeds a predicted tilt amount is calculated, and whether the allowable amount is exceeded until the scheduled date of next maintenance is determined (S506). In the example of Fig. 8, the timing at which the predicted tilt amount exceeds the allowable amount is the 40th day. Therefore, the tilt amount on the 40th day and the tilt amount on the scheduled date of next maintenance are compared to each other. This way, a period where the leveling of the reaction tank 36 is required is predicted. Therefore, by executing the leveling before a malfunction occurs in the reaction tank 36, the occurrence of a problem is avoided in advance.

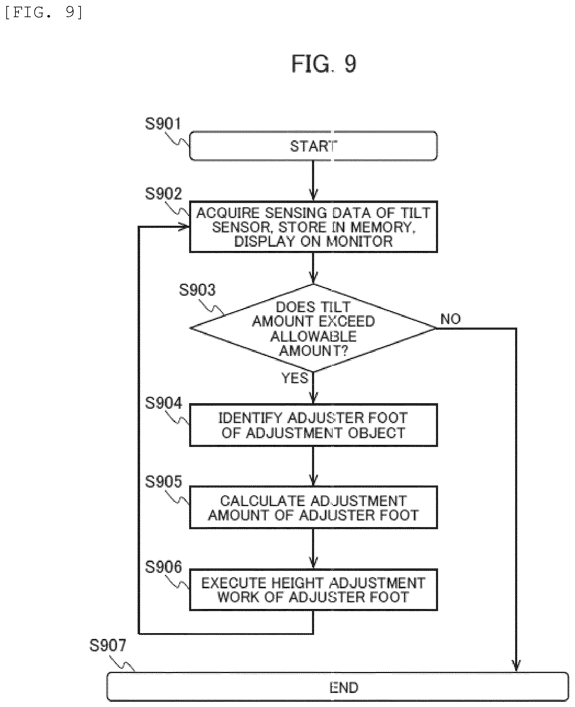

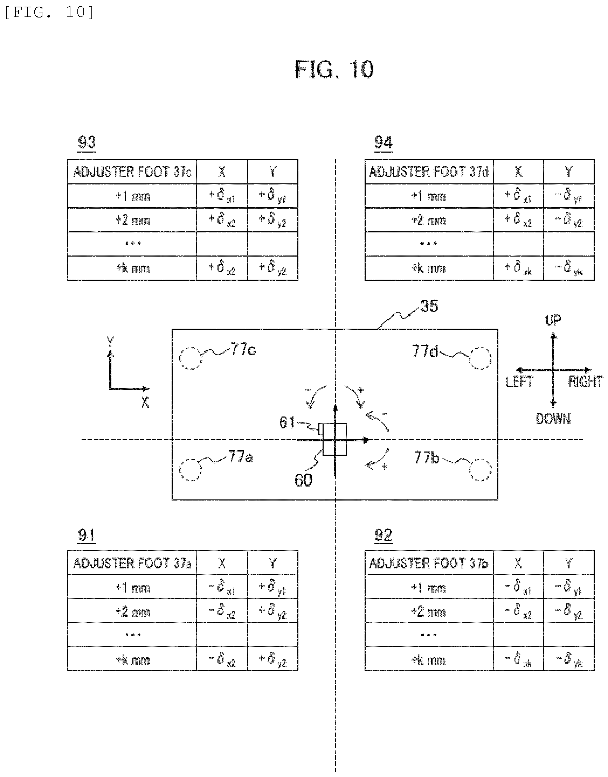

When tilting occurs in an amount exceeding the allowable amount, the tilting needs to be modified by adjusting the heights of the adjuster feet. Fig. 9 shows a tilt adjustment flow of the automatic analyzer. The tilt adjustment flow is executed by a terminal that is held by a maintenance worker except for the operation of the adjuster feet. The maintenance worker connects the terminal and the external terminal 61 of the tilt sensor 60 to each other, and gives an instruction to start maintenance through a user interface such as a touch panel (S901). In order to adjust the heights of the adjuster feet, the maintenance is executed in a state where electric power of the automatic analyzer is not turned on. Sensing data is acquired from the tilt sensor 60, and is stored in a memory in the terminal. Next, the tilt amount is displayed on a monitor of the terminal such that the maintenance worker can check the tilt amount (S902). The terminal determines whether the tilt amount detected by the tilt sensor 60 exceeds the allowable amount (S903), and executes the tilt adjustment of the device when the tilt amount exceeds the allowable amount. A tilt adjustment method will be described with reference to Fig. 10.

In Fig. 10, the mechanism base 35 is divided into four regions around the tilt sensor 60 by the two axes (X-axis and Y-axis). In top view, the adjuster foot 37a is positioned in the lower left section, the adjuster foot 37b is positioned in the lower right section, the adjuster foot 37c is positioned in the upper left section, and the adjuster foot 37d is positioned in the upper right section.

First, an adjuster foot to be adjusted is identified by combining positive and negative symbols of the tilting of the X-axis and the tilting of the Y-axis of the tilt sensor 60 (S904). In the example of Fig. 10, when the mechanism base 35 is lowered to the lower left side, the symbols of tilting of the two axes (x, y) are (+, -). Likewise, when the mechanism base 35 is lowered to the lower right side, the symbols are (+,+), when the mechanism base 35 is lowered to the upper left side, the symbols are (-,-), and when the mechanism base 35 is lowered to the upper right side, the symbols are (-,+). Accordingly, the adjuster foot to be adjusted (in this case, of which the height is increased) is selected depending on the combination of the symbols of tilting.

Next, the adjustment amount of the selected adjuster foot is calculated (S905). For example, the terminal stores in advance a change amount of the sensing data of the tilt sensor 60 caused by adjusting each of the adjuster feet in advance. For example, adjustment tables 91 to 94 store a change amount of tilting of each of the X-axis and the Y-axis whenever the adjuster foot is lifted by 1 mm. The adjustment amount of the height of the adjuster foot is calculated and displayed on the monitor of the terminal such that the tilt amounts of the two axes of the tilt sensor acquired in Step S902 are offset from each other with reference to the adjustment table of the adjuster foot to be adjusted.

The maintenance worker executes a height adjustment work of the adjuster foot according to the display result (S906). After the work, the process returns to Step S902 again, and the flow is repeated. When the tilt amount is the allowable amount or less in Step S903, the tilt adjustment flow ends (S907).

### Reference Signs List

1: reaction disk
2: reaction container
3: cleaning mechanism
4: spectral photometer
5, 6: stirring mechanism
5a: stirring element
5b: reflection plate
7, 8, 9, 10: reagent dispensing mechanism
7a, 8a, 9a, 10a: reagent nozzle
11: reagent disk
12: reagent bottle
13, 14: sample dispensing mechanism
13a, 14a: sample nozzle
15, 16: sample nozzle cleaning tank
17: sample container
18: rack (transportation member)
19: sample transportation mechanism
20: reagent pump
21: sample pump
22: cleaning pump
30, 31, 32, 33: reagent nozzle cleaning tank
35: mechanism base
36: reaction tank
37a, 37b, 37c, 37d: adjuster foot
38: water level sensor
38a: detection unit
41: control unit
42: data storage unit
43: input unit
44: measurement unit
45: analysis unit
46: output unit
60: tilt sensor
70: frame
71: column
72a: bottom plate (frame bottom surface)
72b: upper plate (frame upper surface)
73: support column
74: space
77: position
80: time series data
81: acquisition time
82: item
83: determination result
84, 85: sensing data
91, 92, 93, 94: adjustment table

## Claims

1. An automatic analyzer comprising:
a frame (70) including a frame upper surface (72b) and a frame bottom surface (72a) having a rectangular shape;
a plurality of adjuster feet (37a-d) arranged on the frame bottom surface (72a) and supporting the frame (70);
a mechanism base (35) supported by the frame upper surface (72b);
a reaction tank (36) which is arranged on the mechanism base (35) and in which a reaction container (2) storing a mixed liquid of reagent and a sample is arranged;
a tilt sensor (60) arranged on the mechanism base (35);
an analysis unit (45) determining whether a tilt amount of the mechanism base (35) based on sensing data from the tilt sensor (60) exceeds an allowable amount; and
a data storage unit (42) accumulating sensing data from the tilt sensor (60) and acquisition time of the sensing data,
wherein the tilt sensor (60) is arranged at a position not overlapping with the adjuster foot (37a-d) in top view,
**characterized in that**
the analysis unit (45) predicts a tilt amount in future of the mechanism base (35) based on time series data of sensing data from the tilt sensor (60) accumulated in the data storage unit (42), and
the tilt sensor (60) includes an external terminal executing power supply and communication.

2. The automatic analyzer according to claim 1, wherein
the adjuster foot (37a-d) is arranged at least at four corners of the frame bottom surface (72a), and
the tilt sensor (60) is arranged on the inner side of the adjuster foot (37a-d) arranged at four corners of the frame bottom surface (72a) in top view.

3. The automatic analyzer according to claim 2, wherein
the tilt sensor (60) is a tilt sensor (60) capable of detecting tilting of two axes, and
the any one adjuster foot (37a-d) arranged at four corners of the frame bottom surface (72a) is positioned in top view in each of regions separated by the two axes around the tilt sensor (60).

4. The automatic analyzer according to claim 1, further comprising:
a water level sensor (38) detecting water level of the reaction tank (36); and
a stirring mechanism (5, 6) stirring a mixed liquid within the reaction container (2),
wherein the allowable amount is determined as such range of water level of the reaction tank (36) detected by the water level sensor (38) that the reaction tank (36) and the stirring mechanism (5, 6) can be operated appropriately.

5. A tilt adjustment method of an automatic analyzer, the automatic analyzer including: a frame (70) including a frame upper surface (72b) and a frame bottom surface (72a) having a rectangular shape; a plurality of adjuster feet (37a-d) arranged on the frame bottom surface (72a) and supporting the frame (70); a mechanism base (35) supported by the frame upper surface (72b); a reaction tank (36) which is arranged on the mechanism base (35) and in which a reaction container (2) storing a mixed liquid of reagent and a sample is arranged; a tilt sensor (60) of two axes arranged at a position on the mechanism base (35), the position not overlapping with the adjuster foot (37a-d) in top view; an analysis unit (45) determining whether a tilt amount of the mechanism base (35) based on sensing data from the tilt sensor (60) exceeds an allowable amount; and a data storage unit (42) accumulating sensing data from the tilt sensor (60) and acquisition time of the sensing data, the tilt adjustment method comprising steps of:
feeding electric power to the tilt sensor (60) from an external terminal of the tilt sensor (60) without turning on electric power of the automatic analyzer;
acquiring sensing data from the tilt sensor (60);
selecting the adjuster foot (37a-d) adjusting height based on combination of positive and negative tilt amounts of the two axes of the tilt sensor (60); and
**characterized in that** the method includes the step of predicting, by the analysis unit (45), a tilt amount in future of the mechanism base (35) based on time series data of sensing data from the tilt sensor (60) accumulated in the data storage unit (42).

6. The tilt adjustment method of an automatic analyzer according to claim 5, further comprising steps of:
storing a change amount of tilt amounts of the two axes of the tilt sensor (60) caused by changing height of the adjuster foot (37a-d) beforehand; and
calculating an adjustment amount of height of the adjuster foot (37a-d) selected so as to offset the tilt amounts of the two axes of the tilt sensor (60).

## Patentansprüche

1. Automatischer Analysator umfassend:
einen Rahmen (70), der eine Rahmen-Oberseite (72b) und eine Rahmen-Unterseite (72a) mit rechteckiger Form aufweist;
mehrere Einsteller-Füße (37a-d), die auf der Rahmen-Unterseite (72a) angeordnet sind und den Rahmen (70) stützen;
eine Mechanismus-Basis (35), die von der Rahmen-Oberseite (72b) gestützt wird;
einen Reaktionstank (36), der auf der Mechanismus-Basis (35) angeordnet ist und in dem ein Reaktionsbehälter (2) angeordnet ist, der eine Mischflüssigkeit aus einem Reagens und einer Probe speichert;
einen Neigungssensor (60), der auf der Mechanismus-Basis (35) angeordnet ist;
eine Analyseeinheit (45), die bestimmt, ob ein Neigungsbetrag der Mechanismus-Basis (35) basierend auf Sensordaten von dem Neigungssensor (60) einen zulässigen Betrag überschreitet; und
eine Datenspeichereinheit (42), die Sensordaten von dem Neigungssensor (60) und eine Aufnahmezeit der Sensordaten sammelt,
wobei der Neigungssensor (60) an einer Position angeordnet ist, die in der Draufsicht nicht mit den Einsteller-Füßen (37a-d) überlappt,
**dadurch gekennzeichnet, dass**
die Analyseeinheit (45) einen zukünftigen Neigungsbetrag der Mechanismus-Basis (35) basierend auf Zeitreihendaten von Sensordaten von dem Neigungssensor (60) vorhersagt, die in der Datenspeichereinheit (42) gesammelt wurden, und
der Neigungssensor (60) einen externen Anschluss aufweist, der Stromversorgung und Kommunikation ausführt.

2. Automatischer Analysator nach Anspruch 1, wobei
die Einsteller-Füße (37a-d) mindestens an vier Ecken der Rahmen-Unterseite (72a) angeordnet sind, und
der Neigungssensor (60) auf der Innenseite der Einsteller-Füße (37a-d) angeordnet ist, die in der Draufsicht an vier Ecken der Rahmen-Unterseite (72a) angeordnet sind.

3. Automatischer Analysator nach Anspruch 2, wobei
der Neigungssensor (60) ein Neigungssensor (60) ist, der fähig ist, Neigung von zwei Achsen zu erfassen, und
der jeweilige eine Einsteller-Fuß (37a-d), der an vier Ecken der Rahmen-Unterseite (72a) angeordnet ist, in der Draufsicht in jedem der Bereiche positioniert ist, die durch die zwei Achsen um den Neigungssensor (60) getrennt sind.

4. Automatischer Analysator nach Anspruch 1, ferner umfassend:
einen Wasserpegelsensor (38), der den Wasserpegel des Reaktionstanks (36) erfasst; und
einen Rührmechanismus (5, 6), der eine Mischflüssigkeit innerhalb des Reaktionsbehälters (2) rührt,
wobei der zulässige Betrag als ein solcher Bereich des von dem Wasserpegelsensor (38) erfassten Wasserpegels des Reaktionstanks (36) bestimmt wird, dass der Reaktionstank (36) und der Rührmechanismus (5, 6) angemessen betrieben werden können.

5. Neigungseinstellungsverfahren eines automatischen Analysators, wobei der automatische Analysator aufweist: einen Rahmen (70), der eine Rahmen-Oberseite (72b) und eine Rahmen-Unterseite (72a) mit rechteckiger Form aufweist; mehrere Einsteller-Füße (37a-d), die auf der Rahmen-Unterseite (72a) angeordnet sind und den Rahmen (70) stützen; eine Mechanismus-Basis (35), die von der Rahmen-Oberseite (72b) gestützt wird; einen Reaktionstank (36), der auf der Mechanismus-Basis (35) angeordnet ist und in dem ein Reaktionsbehälter (2) angeordnet ist, der eine Mischflüssigkeit aus einem Reagens und einer Probe speichert; einen zweiachsigen Neigungssensor (60), der an einer Position auf der Mechanismus-Basis (35) angeordnet ist, wobei die Position in der Draufsicht nicht mit den Einsteller-Füßen (37a-d) überlappt; eine Analyseeinheit (45), die bestimmt, ob ein Neigungsbetrag der Mechanismus-Basis (35) basierend auf Sensordaten von dem Neigungssensor (60) einen zulässigen Betrag überschreitet; und eine Datenspeichereinheit (42), die Sensordaten von dem Neigungssensor (60) und eine Aufnahmezeit der Sensordaten sammelt, wobei das Neigungseinstellungsverfahren folgende Schritte umfasst:
Zuführen elektrischer Leistung von einem externen Anschluss des Neigungssensors (60) zu dem Neigungssensor (60) ohne die elektrische Leistung des automatischen Analysators einzuschalten;
Erfassen von Sensordaten von dem Neigungssensor (60);
Auswählen der Einsteller-Füße (37a-d), die Höhe einstellen, basierend auf einer Kombination von positiven und negativen Neigungsbeträgen der zwei Achsen des Neigungssensors (60); und
**dadurch gekennzeichnet, dass** das Verfahren den folgenden Schritt umfasst:
Vorhersagen, durch die Analyseeinheit (45), eines zukünftigen Neigungsbetrags der Mechanismus-Basis (35) basierend auf Zeitreihendaten von Sensordaten von dem Neigungssensor (60), die in der Datenspeichereinheit (42) gesammelt wurden.

6. Neigungseinstellungsverfahren eines automatischen Analysators nach Anspruch 5, das ferner folgende Schritte umfasst:
Speichern eines Änderungsbetrags von Neigungsbeträgen der zwei Achsen des Neigungssensors (60), der durch Ändern der Höhe der Einsteller-Füße (37a-d) verursacht wird, im Voraus; und
Berechnen eines Einstellungsbetrags der Höhe der ausgewählten Einsteller-Füße (37a-d), um die Neigungsbeträge der zwei Achsen des Neigungssensors (60) auszugleichen.

## Revendications

1. Analyseur automatique comprenant :
un châssis (70) incluant une surface supérieure (72b) de châssis et une surface inférieure (72a) de châssis ayant une surface rectangulaire ;
une pluralité de pieds (37a-d) d'ajustement agencés sur la surface inférieure (72a) de châssis et supportant le châssis (70) ;
une base (35) de mécanisme supportée par la surface supérieure (72b) de châssis ;
une cuve (36) de réaction qui est agencée sur la base (35) de mécanisme et dans laquelle un récipient (2) de réaction stockant un liquide mixte d'un réactif et d'un échantillon est agencé ;
un capteur (60) d'inclinaison agencé sur la base (35) de mécanisme ;
une unité (45) d'analyse déterminant si une quantité d'inclinaison de la base (35) de mécanisme sur la base de données de détection provenant du capteur (60) d'inclinaison excède une quantité acceptable ; et
une unité (42) de stockage de données accumulant des données de détection provenant du capteur (60) d'inclinaison et un moment d'acquisition des données de détection,
dans lequel le capteur (60) d'inclinaison est agencé en une position ne se chevauchant pas avec le pied (37a-d) d'ajustement en vue du dessus,
**caractérisé en ce que**
l'unité (45) d'analyse prédit une quantité d'inclinaison dans le futur de la base (35) de mécanisme sur la base de données chronologiques de données de détection provenant du capteur (60) d'inclinaison accumulées dans l'unité (42) de stockage de données, et
le capteur (60) d'inclinaison inclut un terminal externe exécutant alimentation électrique et communication.

2. Analyseur automatique selon la revendication 1, dans lequel
le pied (37a-d) d'ajustement est agencé au moins aux quatre angles de la surface inférieure (72a) de châssis, et
le capteur (60) d'inclinaison est agencé sur le côté intérieur du pied (37a-d) d'ajustement agencé aux quatre angles de la surface inférieure (72a) de châssis en vue du dessus.

3. Analyseur automatique selon la revendication 2, dans lequel
le capteur (60) d'inclinaison est un capteur (60) d'inclinaison apte à détecter l'inclinaison de deux axes, et
le pied (37a-d) d'ajustement quelconque agencé aux quatre angles de la surface inférieure (72a) de châssis est positionné en vue du dessus dans chacune de régions séparées par les deux axes autour du capteur (60) d'inclinaison.

4. Analyseur automatique selon la revendication 1, comprenant en outre :
un capteur (38) de niveau d'eau détectant un niveau d'eau de la cuve (36) de réaction ; et
un mécanisme (5, 6) d'agitation agitant un liquide mixte à l'intérieur du récipient (2) de réaction,
dans lequel la quantité acceptable est déterminée comme une plage de niveau d'eau de la cuve (36) de réaction détecté par le capteur (38) de niveau d'eau telle que la cuve (36) de réaction et le mécanisme (5, 6) d'agitation peuvent être opérés de façon appropriée.

5. Procédé d'ajustement d'inclinaison d'un analyseur automatique, l'analyseur automatique incluant : un châssis (70) incluant une surface supérieure (72b) de châssis et une surface inférieure (72a) de châssis ayant une surface rectangulaire ; une pluralité de pieds (37a-d) d'ajustement agencés sur la surface inférieure (72a) de châssis et supportant le châssis (70) ; une base (35) de mécanisme supportée par la surface supérieure (72b) de châssis ; une cuve (36) de réaction qui est agencée sur la base (35) de mécanisme et dans laquelle un récipient (2) de réaction stockant un liquide mixte d'un réactif et d'un échantillon est agencé ; un capteur (60) d'inclinaison à deux axes agencé en une position sur la base (35) de mécanisme, la position ne se chevauchant pas avec le pied (37a-d) d'ajustement en vue du dessus ; une unité (45) d'analyse déterminant si une quantité d'inclinaison de la base (35) de mécanisme sur la base de données de détection provenant du capteur (60) d'inclinaison excède une quantité acceptable ; et une unité (42) de stockage de données accumulant des données de détection provenant du capteur (60) d'inclinaison et un moment d'acquisition des données de détection, le procédé d'ajustement d'inclinaison comprenant des étapes de :
alimentation en énergie électrique du capteur (60) d'inclinaison depuis un terminal externe du capteur (60) d'inclinaison sans activer l'énergie électrique de l'analyseur automatique ;
acquisition de données de détection depuis le capteur (60) d'inclinaison ;
sélection de la hauteur d'ajustement de pied (37a-d) d'ajustement sur la base d'une combinaison de quantités positives et négatives d'inclinaison des deux axes du capteur (60) d'inclinaison ; et
**caractérisé en ce que** le procédé inclut l'étape de :
prédiction, par l'unité (45) d'analyse, d'une quantité d'inclinaison dans le futur de la base (35) de mécanisme sur la base de données chronologiques de données de détection provenant du capteur (60) d'inclinaison accumulées dans l'unité (42) de stockage de données.

6. Procédé d'ajustement d'inclinaison d'un analyseur automatique selon la revendication 5, comprenant en outre des étapes de :
stockage d'une quantité de changement de quantités d'inclinaison des deux axes du capteur (60) d'inclinaison causée par un changement de hauteur du pied (37a-d) d'ajustement au préalable ; et
calcul d'une quantité d'ajustement de hauteur du pied (37a-d) d'ajustement sélectionné de façon à décaler les quantités d'inclinaison des deux axes du capteur (60) d'inclinaison.
